# EUROPEAN PATENT SPECIFICATION

(11) **EP 3 002 177 B1**
(45) Date of publication and mention of the grant of the patent: **13.12.2017**
(21) Application number: 14003388.7
(22) Date of filing: 01.10.2014
(51) Int. Cl.: B62D 1/06, B62D 1/11

(54) **Metal core element for a rim of a vehicle steering wheel, vehicle steering wheel and method for producing same**
Metallkernelement für einen Rand eines Fahrzeuglenkrads, Fahrzeuglenkrad und Verfahren zur Herstellung davon
Élément de noyau métallique destiné à une jante de volant de direction d'un véhicule, volant de véhicule et son procédé de production

(43) Date of publication of application: 06.04.2016
(73) Proprietor: Dalphi Metal España, S.A., 36213 Vigo (ES)
(72) Inventor: Lois Martinez, Carlos, 36201 Vigo (ES)
(74) Representative: ZF TRW Patentabteilung

(56) References cited:
- EP-A2- 0 369 520
- EP-A2- 1 593 578
- WO-A2-2010/039927

## Description

The invention relates to a vehicle steering wheel comprising a metal core element and a method for producing the vehicle steering wheel.

Vehicle steering wheels in general comprise a magnesium armature which includes a central hub, a rim encircling the central hub and spokes connecting the rim to the central hub. The rim usually includes a rod-like core element or inlay of steel that is encased by a foamed sheath which can additionally be covered by e.g. a wooden or leather coating. The use of a steel inlay is required to achieve a high polar moment of inertia of the vehicle steering wheel which is desirable to reduce torsion stress. At the same time, the steel inlay stiffens the rim of the vehicle steering wheel.

The steel inlay is typically formed by a solid rod which is crimped with its ends to the magnesium armature. In case of an impact that is, e.g., simulated with the so-called maxilla test, the crimped connection between the steel rod and the armature often breaks which leads to undesired test results.

Thus, a vehicle steering wheel should fulfill two opposing requirements. On the one hand, the rim of the vehicle steering wheel should be rigid and weighty to obtain a high polar moment of inertia as desired by vehicle manufacturers. Therefore, the inlay or metal core element of the rim should add appropriate mass to the steering wheel. On the other hand, the rim should be flexible to satisfy the requirements of energy absorption in the maxilla test. That is, the rim should not break at the crimped connection in response to impact forces, especially if these are applied using the maxilla test.

WO 2010/039927 A2 shows a steering wheel with a rotation axis and an armature including a central hub, a circumferential rim positioned apart from the hub and at least one spoke connecting the hub and the rim. The circular rim includes indentations acting as stress risers to enable a top portion and/or lower portion of the rim to compress more when a determinable force is applied against the rim in a radial direction compared to when the same force is applied at an angle to a plane in which the rim is located.

It is an object of the present invention to provide a steering wheel including a metal core element that provides for adding the necessary mass to the rim of a vehicle steering wheel and, at the same time, is able to absorb impact forces. A further object of the invention is to provide a method of producing such a steering wheel.

The present invention solves the abovementioned objects by a vehicle steering wheel according to claim 1 and a manufacturing method according to claim 9.

The present invention is based on the idea of providing a metal core element for a rim of a vehicle steering wheel wherein the metal core element is formed by a rod comprising stress concentrating sections. The rod has a reduced thickness in the stress concentrating sections so as to allow bending or breaking of the rod in the stress concentrating sections in response to impact forces.

The stress concentrating sections of the present invention are defined by areas of the rod that have a reduced thickness. By providing these stress concentrating sections, the rod is provided with flexibility which allows the rod to bend in response to static or dynamic impact forces, in particular if applied by the maxilla test. With the rod having stress concentrating sections, the inventive metal core element is able to absorb impact forces by bending but also includes the necessary mass to reach the requirements for a high polar moment of inertia. The flexibility added to the rod by providing the stress concentrating sections also avoids high peak forces at the end portions of the rod or the metal core element.

Generally, the basic idea of the present invention is to provide a metal core element consisting of or comprising a substantially solid rod that has no constant thickness along its length. Rather, the rod has a varying thickness or diameter along its length. The rod may be in any case a single piece rod. The rod may be provided with multiple cuts along its length, the cuts forming the stress concentrating sections. That is, in the context of the present application, sections of the rod that have a reduced thickness or diameter are defined as being stress concentrating sections. The internal stress inside the rod is concentrated in these sections which thus form bending elements or predetermined breaking points. In case of an impact, e.g. during the maxilla test, the rod bends or breaks in the stress concentrating sections, thus reducing the peak forces at the end portions of the rod.

According to the invention, the rod has a longitudinal axis that extends in a curved shape. This allows for the rod to be included into a rim of a vehicle steering wheel without the further step of adapting the shape of the rod to the shape of the rim and, thus, allows for simple and cost-efficient manufacturing.

The stress concentrating sections may be sequentially arranged along a length of the rod. In particular, the stress concentrating sections may be arranged along the longitudinal axis of the rod in a sequential manner. The sequential arrangement of the stress concentrating sections ensures that impact forces can be absorbed at any section along the length of the rod. The stress concentrating sections may, in particular, be equally spaced along the rod, in particular along the longitudinal axis of the rod, which facilitates a uniform absorption capability of the metal core element.

In a further preferred embodiment, the stress concentrating sections are arranged to form a toothed rod shape. This type of uniform distribution of the stress concentrating sections is easy to manufacture and provides an appropriate flexibility to absorb the impact forces applied in the maxilla test. Moreover, the toothed rod shape can be easily adapted to specific energy absorption requirements by, e.g., controlling the depth of the valleys between the teeth, the teeth angle (or the angle of the teeth) or the distance between the teeth.

The stress concentrating sections may include v-shaped or parabolic recesses. The recesses may form the valleys between the teeth of a toothed shape rod. The v-shaped recesses are easy to manufacture, e.g., by forging or machining. Also, providing v-shaped recesses allows for closely spacing the recesses which enhances the absorption capability of the metal core element. Hence, the recesses, in particular the v-shaped recesses, may abut each other to form a saw-toothed thread design. In other words, the stress concentrating sections may be of a "chainsaw" type.

The parabolic recesses may form so-called circular-type stress concentrating sections. Providing parabolic recesses also enhances the bending capability of the rod or metal core element. At the same time, the parabolic recesses remove less material from the rod which thus retains a high mass which is beneficial in terms of a high polar moment of inertia.

The recesses, in particular the parabolic recesses, may alternatively be spaced apart from each other. This contributes to providing a high polar moment of inertia as the mass removed from the solid rod is reduced. That is, the rod may be provided with stress concentrating sections that are distanced from each other to maintain the mass of the rod and nevertheless provide the necessary flexibility to absorb impact forces.

According to the invention, the recesses or, generally, the stress concentrating sections each include a bottom that extends substantially parallel to the radius of curvature of the rod. The bottom may be flat or just a line edged between v-shaped side walls of the recess. Alternatively, the bottom may be curved between the side walls. In any case, the bottom may have an orientation that extends perpendicular to the longitudinal axis of the rod and parallel to the radius of curvature of the rod. This allows for the stress concentrating sections to be arranged on a front or a back side of the rim of the vehicle steering wheel so as to bend in response of impact forces that impinge upon the rim linearly and in the driving direction of the vehicle.

Preferably, the rod is made of steel. Using steel as a material for the rod provides for the necessary mass to reach the requirements regarding the polar moment of inertia as desired by vehicle manufacturers because steel has a relatively high specific density. Moreover, steel is easy to process or finish, in particular using forging or machining processes. Of course, other materials, in particular such as metal alloys are possible alternatives to steel as rod material, too. In such case, however, the respective material properties such as weight, cost, manufacturability, etc. are important factors for the selection of the rod material.

In general, the stress concentrating sections can be formed by a machining process such as milling or cutting.

The metal armature of the inventive vehicle steering wheel includes a central hub and a rim spaced apart from said hub. Moreover, the metal armature includes at least one spoke extending between and/or connecting the central hub and the rim. The metal core element may be fabricated from magnesium or an alloy comprising magnesium. The rim includes the metal core element. On the one hand, the metal core element stiffens the rim. That is, the metal core element provides a reinforcement member for the rim. On the other hand, due to the stress concentrating sections, the rim is able to absorb impact forces by bending in response to the impact forces. This reduces the peak forces at the end portions of the metal core element and thus ensures that the connection between the metal core element and the metal armature is maintained during an impact. Consequently, the test results of the maxilla test (and other dynamic tests, such as e.g. BB test) are improved and both the requirement of high polar moment of inertia and the requirement of a good energy absorption capability are met at the same time.

In a preferred embodiment, the metal core element is crimped to the metal armature. Particularly, the end portions of the metal core element, especially the rod, may be crimped to the metal armature. The metal armature may include a crimp-sleeve-like section at the outer circumference of each spoke. The rod may be inserted into the crimp-sleeve-like section which is then crimped to engage the end portion of the rod. Thus the rod is fixed in the metal armature in a friction-fit and form-fit manner. Usually the rod is crimped as it needs to be kept in place when the PUR is injected into to foaming form. Alternatively, it could be feasible with the flexible rod to have a different system that will hold the rod in place before injecting PUR. One idea of such a system might be a spring-like rod that is stretched and placed at tabs in open spaces, such when the spring-like rod is released it will close and get stuck at the tabs.

Another advantage of a flexible (spring-like) rod is that it does not have to have a closely defined built-in bend-radius. For example, a rod of length X that will adapt to a Y1...Y10 radius, just with the limitation of a minimum or maximum flexing radius Ymin/ Ymax. This would enable to have a one-size-fit-all (or one-size-fit-plural) rod as a solution to fit steering wheels (resp. their respective metal core elements) of different (rim) diameters. Such solution could help to communalize rods, especially if such rod would comprise break-off portions at at least one of their edges that may be dispatched if not needed in certain projects.

While it is preferred that the rod has a (substantially) circular cross section, embodiments are possible (which are combinable to all other features described herein) having a different basic type of shaft cross section, e.g. rectangular , square, oval, etc. that commercially could be bough manufactured by forging or extrusion.

The steering wheel may have a front side facing a vehicle driver when installed in a vehicle such as a passenger car. The steering wheel may also have a back side facing an instrument panel of a vehicle when installed in a vehicle. The stress concentrating sections are preferably oriented towards the front or the back side. That is, the recesses that form the stress concentrating sections may have a bottom that extends in a plane that is perpendicular to the steering wheel axis or the steering rod.

The rod of the metal core element is curved wherein the radius of curvature preferably runs through the steering wheel axis or the centre of the central hub of the steering wheel. The bottom of each recess extends parallel to said radius of curvature. As the stress concentrating sections are oriented towards the driver or an instrument panel of a vehicle, the inventive steering wheel is able to absorb the relevant forces that may be applied due to impact forces resulting from a vehicle accident. In particular, the impact forces applied in the maxilla test are effective in a direction that is substantially parallel to the steering wheel axis.

Due to the proposed orientation of the stress concentrating sections, the rim is able to bend in response to typical impact forces. Thus, the rim may be deflected towards the instrument panel. This leads to decreasing deceleration forces applied to, e.g., the head of the driver in a crash situation. In other words, the increase in deceleration peaks of the impacting head, and thus the risk of heavy injuries, is reduced.

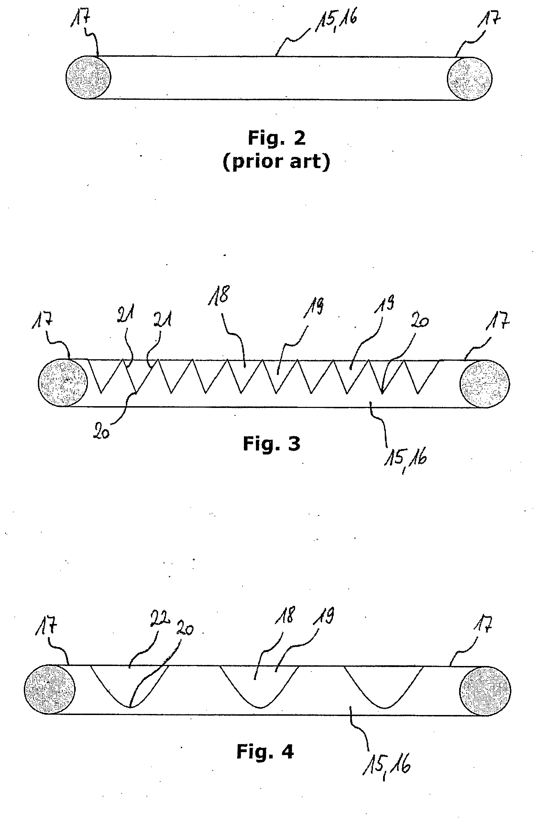

A further aspect of the present invention concerns a method for producing the above described steering wheel. In the inventive method the rod of the metal core element is bent to form a curved shape rod and provided with recesses by forging or machining to form stress concentrating sections on the rod, wherein the metal core element is crimped or clamped to the metal armature. In particular, the rod may be provided with the recesses after forming the curved shape rod. In a first preferred embodiment, as shown in Fig. 4, the recesses have rather angled corner portions between the v-legs. In a second preferred embodiment, as shown in Fig. 5, the recesses have round corner portions between the v-legs. Either embodiment may have U-shaped recesses instead of the V-shaped recesses; or according to another preference, semi- or partially circular, rectangular, trapezoidal, parabolic or hyperbolic recesses (with angled or rounded portions at their respective lower or upper ends) are possible. The recesses may be fabricated by machining, especially by milling or cutting. That is, material may be removed from a solid rod to provide the stress concentrating sections. Alternatively, the rod including the recesses may be formed by sand molded casting. The solid rod may have a circular cross section.

Finally, the present invention is based on the idea to use the metal core element as described above as reinforcement means for a rim of a vehicle steering wheel. The reinforcement means stiffens the rim which is desired to fulfil the requirements regarding the polar moment of inertia on demand of vehicle manufacturers. As the metal core element of the present invention additionally includes stress concentrating sections, the rim still includes flexibility to bend in response to impact forces, in particular according to the maxilla test.

The present invention shall be descripted hereinafter in detail with respect to the following schematic drawings:
Fig. 1 a top view of an inventive vehicle steering wheel including a metal core element as a reinforcement means of the rim;
Fig. 2 a side view of a prior art metal core element;
Fig. 3 a side view of an inventive metal core element of the "chainsaw type"; and
Fig. 4 a side view of an inventive metal core element of the "circular type".

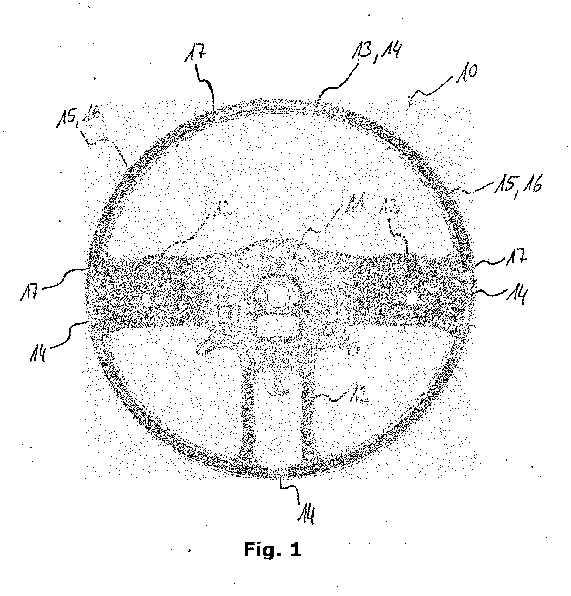

Fig. 1 shows a vehicle steering wheel 10 according to the invention. The steering wheel 10 includes a central hub 11 and a rim 13 spaced apart from said hub 11. The rim 13 and the hub 11 are connected by means of spokes 12 that extend between the hub 11 and the rim 13. At least one, herein two, spokes 12 extend radially from the hub 11. The hub 11, the spokes 12 and the rim 13 together form a metal armature of the steering wheel 10. The metal armature is made of magnesium or an alloy comprising magnesium. Thus, the steering wheel 10 is of light-weight design.

The rim 13 includes crimping sections 14 that are arranged at the outer circumference of the steering wheel 10. Specifically, the crimping sections 14 may be arranged in sections of the rim 13 which connect the rim 13 to the spoke 12. An additional crimping section 14 may be arranged at a twelve o'clock position, i.e. opposing a six o'clock oriented spoke 12. In other words, the steering wheel 10 preferably includes four crimping sections 14 that are arranged on the rim 13 at a twelve o'clock, a three o'clock, a six o'clock and a nine o'clock position.

The crimping sections 14 may include a crimping sleeve having an inner diameter that substantially corresponds to the outer diameter of a metal core member 15 or a rod 16 of said metal core member 15. The rod 16 may have end portions 17 that are arranged inside the crimping sections 14. The crimping sections 14 may be crimped at least in the area overlapping the end portions 17 of the rod 16 thus fastening or fixing the rod 16 in place.

The rod 16 may be a curved shape rod 16 having a radius of curvature corresponding to the radius of curvature of the rim 13. The radius of curvature may emanate from a centre point that is located within the central hub 11. In the prior art steering wheel according to Fig. 2, the rod 16 is a solid rod 16 having a constant cross section. In particular, the rod 16 has a circular cross section.

In general, the rod 16 or metal core element 15 is made of steel to enhance the polar moment of inertia as required by vehicle manufacturers. The metal core element 15 thus forms a reinforcement means for the steering wheel 10. Adding mass to the steering wheel 10 reduces the torsional stress inside the rim 13 and enhances the overall appearance of the steering wheel. However, this also leads to high peak forces at the end portions of the rod 16 in impact situations. In particular, the so called "maxilla test" could lead to a break of the crimped connections between the crimping sections 14 of the rim 13 and the end portions 17 of the metal core element 15.

To avoid such peak forces and to reach the polar moment of inertia requirements simultaneously, the inventive rod 16 includes stress concentrating sections 18 as shown in Figs. 3 and 4. The stress concentrating sections 18 may be formed by recesses 18 that are evenly spaced along the length of the rod 16. In particular, the rod 16 includes a longitudinal axis that is curved to form a curved shape rod 16 wherein the recesses 18 are sequentially arranged along the longitudinal axis.

Generally, the stress concentrating sections 18 are arranged on a side of the rod 16 that is in the mounting position, i.e., inside a rim 14 of a vehicle steering wheel 10, oriented towards a front side or a back side of the vehicle steering wheel 10. Thus, the rim 16 is able to deflect in a direction perpendicular to the rim plane and parallel to the steering axis. Simultaneously, the rim 16 that is preferably made of steel increases the mass of the steering wheel which is desired in terms of high polar moments of inertia and vibration behaviour. Thus, the opposing requirements that vehicle manufacturers lay down with regard to mass and flexibility can be met.

In the embodiment of Fig. 3, the rod 16 includes a so-called "chainsaw type" design. That is, the stress concentrating sections are formed by v-shaped recesses 19 that are sequentially arranged along the length of the rod 16. The recesses 19 are identically. The shape of the recesses 19 resembles the letter "V" when viewed from a side of the rod 16. The v-shape is best seen if the viewer stands at the central hub 11 and looks along the radius of curvature of the rod 16. The sequentially arranged recesses 16 form a saw-toothed tread design.

Each v-shaped recess 16 includes a bottom 20 or bottom line that forms an edge between two side walls 21. The side walls 21 are arranged at an acute angle that is defined as the "teeth angle". The bottom 16 or bottom line is oriented parallel to the radius of curvature of the rod 16 or metal core element 15. In order to be able to adapt the mass and bending capability of the steering wheel to different needs while using a standardized metal armature, the characteristic of the metal core element 15 or rod 16 may be adjusted by changing some design parameters. In particular, the rod diameter, the teeth angle, the depth of the recesses 19 or "valleys" and/or the distance between the recesses may be changed to adjust the flexibility of the rod 16. For example, increasing the depth of one or more recesses 19 leads to higher flexibility or an earlier breaking of the rod 16.

Fig. 4 shows a different embodiment wherein the stress concentrating sections 18 are of the "circular type". The stress concentrating sections 18 are formed by recesses 19 that have a circular edge at the outer surface of the rod 16 and a parabolic shape in cross section. The recesses 19 substantially form craters or sinkholes with a rounded bottom 20. In the illustrated embodiment, the recesses 19 are spaced from each other at a distance but may also abut each other. Each recess 19 forms an opening 22 that is oriented towards a front side or a back side of the vehicle steering wheel 10 in the mounting position of the rod 16. Like the v-shaped recesses 19, the parabolic recesses 19 decrease the stiffness of the rod 16 without significantly decreasing the mass added to the vehicle steering wheel 10 by means of the rod 16.

To adapt the rod to the requirements of different vehicle manufacturers, some design parameters may be changed. In the circular type embodiment of the metal core element 15, e.g., the rod diameter, the diameter of the sinkhole or recess 19, the shape of the sinkhole or recess 19, the valley depth or sinkhole depth and/or the distance between the recesses 19 may be changed to adjust the flexibility of the rod 16.

Any other kind of modification on a solid rod 16 that adds stress concentrating sections or weakening portions, e.g. sections of reduced diameter or thickness, to the rod 16 may be used to create a polar moment of inertia, maxilla and dynamic impact optimized metal core element 15. Specifically, after its modification, the rod 16 shall not have a constant diameter or thickness. This creates a rod 16 or metal core element 15 which may be used as a reinforcement means that includes a modular failure capability or high flexibility. That is, the metal core element 15 may break or bend in response to dynamic impact forces at desired positions. Theses impact forces may be applied by a vehicle driver's head in a crash situation. The head typically impacts the rim 13 of the vehicle steering wheel 10 at a twelve o'clock position which leads to high peak forces at the end portions 17 of the rods 16 in the region of the horizontal spokes 12, i.e., the spokes 12 extending at the three o'clock and the nine o'clock positions. As the inventive metal core element 15 includes a high bending capability or predetermined breaking points defined by the stress concentrating sections 18, respectively, the crimped connection between the end portions 17 and the metal armature at the spokes 12 does not experience high peak forces and breakage of the rim 13 in this area is avoided.

### List of reference numerals:

- 10: steering wheel
- 11: central hub
- 12: spoke
- 13: rim
- 14: crimping section
- 15: metal core element
- 16: rod
- 17: end portion
- 18: stress concentrating section
- 19: recess
- 20: bottom
- 21: side wall
- 22: opening

## Claims

1. A vehicle steering wheel (10) comprising
a metal armature including a central hub (11), a rim (13) spaced apart from said central hub (11) and at least one spoke (12) extending between the central hub (11) and the rim (13),
wherein the rim (13) includes a metal core element (15) that is attached to the metal armature, the metal core element (15) being formed by a rod (16) comprising stress concentrating sections (18),
wherein the rod (16) has a longitudinal axis that extends in a curved shape and a reduced thickness in the stress concentrating sections (18) so as to allow bending or breaking of the rod (16) in the stress concentrating sections (18) in response to impact forces,
wherein the stress concentrating sections (18) are formed by recesses (19), each recess (19) including a bottom that extends substantially parallel to the radius of curvature of the rod (16).

2. The vehicle steering wheel (10) according to claim 1, **characterized in that** the stress concentrating sections (18) are sequentially arranged along a length of the rod (16).

3. The vehicle steering wheel (10) according to any of the preceding claims, **characterized in that** the stress concentrating sections (18) are arranged to form a toothed rod shape.

4. The vehicle steering wheel (10) according to any of the preceding claims, **characterized in that** the stress concentrating sections (18) include v-shaped, u-shaped, trapezoidal, rectangular, hyperbolic, semi- or partially circular, or parabolic recesses (19), preferably with round corner portions or according to another preference with angled corner portions between the v-legs or u-segments.

5. The vehicle steering wheel (10) according to any of the preceding claims, **characterized in that** the recesses (19), in particular the parabolic recesses (19), are spaced apart from each other.

6. The vehicle steering wheel (10) according to any of the preceding claims, **characterized in that** the recesses (19), in particular the v-shaped recesses (19), abut each other to form a saw-toothed tread design.

7. The vehicle steering wheel (10) according to any of the preceding claims, **characterized in that** the rod (16) is made of steel.

8. The vehicle steering wheel (10) according to any of the preceding claims, **characterized in that** the steering wheel (10) has a front side facing a vehicle driver and a back side facing an instrument panel, wherein the stress concentrating sections (18) of the rod (16) are oriented towards the front side, or wherein the stress concentrating sections (18) of the rod (16) are oriented towards the back side.

9. A method for producing a vehicle steering wheel (10) of any of the preceding claims,
wherein the rod (16) of the metal core element (15) is bent to form a curved shape rod (16) and provided with recesses (19) by forging or machining to form stress concentrating sections (18) on the rod (16) and
wherein the metal core element (15) is crimped or clamped to the metal armature.

## Patentansprüche

1. Fahrzeuglenkrad (10) mit
einem Metallskelett mit einer mittigen Nabe (11), einem von der mittigen Nabe (11) beabstandeten Rand (13) und mindestens einer Speiche (12), die sich zwischen der mittigen Nabe (11) und dem Rand (13) erstreckt,
wobei der Rand (13) ein Metallkernelement (15) aufweist, das an dem Metallskelett befestigt ist, wobei das Metallkernelement (15) von einem Stab (16) mit Spannungskonzentrationsabschnitten (18) gebildet ist,
wobei der Stab (16) eine Längsachse aufweist, die in gebogener Form und mit verringerter Dicke in den Spannungskonzentrationsabschnitten (18) verläuft, um in den Spannungskonzentrationsabschnitten (18) ein Biegen oder Brechen des Stabes (16) in Abhängigkeit von Stoßkräften zu ermöglichen,
wobei die Spannungskonzentrationsabschnitte (18) durch Vertiefungen (19) gebildet sind, wobei jede Vertiefung (19) einen Boden aufweist, welcher sich im Wesentlichen parallel zum Krümmungsradius des Stabes (16) erstreckt.

2. Fahrzeuglenkrad (10) nach Anspruch 1,
**dadurch gekennzeichnet, dass** die Spannungskonzentrationsabschnitte (18) aufeinanderfolgend über eine Länge des Stabes (16) angeordnet sind.

3. Fahrzeuglenkrad (10) nach einem der vorhergehenden Ansprüche,
**dadurch gekennzeichnet, dass** die Spannungskonzentrationsabschnitte (18) zur Ausbildung einer gezahnten Stabform angeordnet sind.

4. Fahrzeuglenkrad (10) nach einem der vorhergehenden Ansprüche,
**dadurch gekennzeichnet, dass** die Spannungskonzentrationsabschnitte (18) V-förmige, U-förmige, trapezförmige, rechteckige, hyperbolische, halb- oder teilkreisförmige oder parabolische Vertiefungen (19) aufweisen, vorzugsweise mit runden Eckabschnitten oder weiter bevorzugt mit winkelförmigen Eckabschnitten zwischen den V-Schenkeln oder den U-Segmenten.

5. Fahrzeuglenkrad (10) nach einem der vorhergehenden Ansprüche,
**dadurch gekennzeichnet, dass** die Vertiefungen (19), insbesondere die parabolischen Vertiefungen (19), voneinander beabstandet sind.

6. Fahrzeuglenkrad (10) nach einem der vorhergehenden Ansprüche,
**dadurch gekennzeichnet, dass** die Vertiefungen (19), insbesondere die V-förmigen Vertiefungen (19), aneinander angrenzen, so dass sie ein gezacktes Profil ausbilden.

7. Fahrzeuglenkrad (10) nach einem der vorhergehenden Ansprüche,
**dadurch gekennzeichnet, dass** der Stab (16) aus Stahl besteht.

8. Fahrzeuglenkrad (10) nach einem der vorhergehenden Ansprüche,
**dadurch gekennzeichnet, dass** das Lenkrad (10) eine Vorderseite, die einem Fahrer des Fahrzeuges gegenüberliegt, und eine Rückseite aufweist, die einem Armaturenbrett gegenüberliegt, wobei die Spannungskonzentrationsabschnitte (18) des Stabes (16) in Richtung der Vorderseite ausgerichtet sind, oder wobei die Spannungskonzentrationsabschnitte (18) des Stabes (16) in Richtung der Rückseite ausgerichtet sind.

9. Verfahren zur Herstellung eines Fahrzeuglenkrades (10) nach einem der vorhergehenden Ansprüche,
wobei der Stab (16) des Metallkernelementes (15) so gebogen ist, dass er einen gekrümmten Stab (16) bildet, und durch Schmieden oder Bearbeiten mit Vertiefungen (19) versehen ist, um Spannungskonzentrationsabschnitte (18) an dem Stab (16) auszubilden, und
wobei das Metallkernelement (15) durch Quetschen oder Klemmen an dem Metallskelett angebracht ist.

## Revendications

1. Volant de véhicule (10) comprenant
une armature métallique incluant un moyeu central (11), une jante (13) espacé dudit moyeu central (11) et au moins une branche (12) s'étendant entre le moyeu central (11) et la jante (13),
pour lequel la jante (13) comprend un élément central métallique (15) qui est fixé à l'armature métallique, l'élément central métallique (15) étant formé par une tige (16) comprenant des sections de concentration de contrainte (18),
pour lequel la tige (16) a un axe longitudinal qui s'étend en une forme incurvée et possède une épaisseur réduite dans les sections de concentration de contrainte (18) de manière à permettre le pliage ou la rupture de la tige (16) dans les sections de concentration de contraintes (18) en réponse aux efforts d'impact,
pour lequel les sections de concentration de contrainte (18) sont formées par des évidements (19), chaque évidement (19) comprenant un fond qui s'étend sensiblement parallèlement au rayon de courbure de la tige (16).

2. Volant de véhicule (10) selon la revendication 1,
**caractérisé en ce que** les sections de concentration de contrainte (18) sont disposées séquentiellement le long d'une longueur de la tige (16).

3. Volant de véhicule (10) selon l'une quelconque des revendications précédentes,
**caractérisé en ce que** les sections de concentration de contrainte (18) sont agencées pour former une forme de tige dentée.

4. Volant de véhicule (10) selon l'une quelconque des revendications précédentes,
**caractérisé en ce que** les sections de concentration de contrainte (18) comprennent des évidements (19) en forme de V, de U, trapézoïdale, rectangulaire, hyperbolique, semi-circulaire ou parabolique, de préférence avec des portions de coins arrondis ou selon une autre préférence avec des portions de coins en angle entre les branches en forme de v ou les segments en forme de u.

5. Volant de véhicule (10) selon l'une quelconque des revendications précédentes,
**caractérisé en ce que** les évidements (19), en particulier les évidements paraboliques (19), sont espacés les uns des autres.

6. Volant de véhicule (10) selon l'une quelconque des revendications précédentes,
**caractérisé en ce que** les évidements (19), en particulier les évidements en forme de v (19), s'enchainent les uns après les autres pour former un design de type dents de scie.

7. Volant de véhicule (10) selon l'une quelconque des revendications précédentes,
**caractérisé en ce que** la tige (16) est en acier.

8. Volant de véhicule (10) selon l'une quelconque des revendications précédentes,
**caractérisé en ce que** le volant (10) présente un côté avant tourné vers le conducteur du véhicule et un côté arrière tourné vers le tableau de bord, dans lequel les sections de concentration de contrainte (18) de la tige (16) sont orientés vers le côté avant, ou dans lequel les sections de concentration de contrainte (18) de la tige (16) sont orientées vers l'arrière.

9. Procédé de fabrication d'un volant de véhicule (10) selon l'une quelconque des revendications précédentes,
Dans lequel la tige (16) de l'élément central métallique (15) est courbée pour former une tige de forme incurvée (16) et pourvue d'évidements (19) par forgeage ou usinage pour former des sections de concentration de contrainte (18) sur la tige (16) et
pour lequel l'élément central métallique (15) est serti ou serré sur l'armature métallique.
